# EUROPÄISCHE PATENTANMELDUNG

(11) **EP 3 671 591 A2**
(43) Veröffentlichungstag der Anmeldung: **24.06.2020**
(21) Anmeldenummer: 19214027.5
(22) Anmeldetag: 06.12.2019
(51) Int. Cl.: G06Q 10/06, G06Q 50/30, G16Y 10/40, G16Y 40/40

(54) **VERFAHREN UND SYSTEM ZUM ERMITTELN EINER REINIGUNG FÜR EIN FAHRZEUG**

(30) Priorität: 20.12.2018 DE 102018222636
(71) Anmelder: Volkswagen AG, 38440 Wolfsburg (DE)
(72) Erfinder: Kleinemas, Eva-Maria, 33415 Verl (DE); Weißbrich, Kira, 38108 Braunschweig (DE); Petershagen, Frank, 30625 Hannover (DE); Otremba, Maik, 38118 Braunschweig (DE)

(57) **Zusammenfassung**

Die Erfindung betrifft ein Verfahren einer Steuereinheit (40, 84) zum Ermitteln einer Reinigung eines Fahrzeugs (10), wobei die Steuereinheit (40, 84 im Falle eines Reinigungsbedarfs Informationen zu einer Verschmutzung des Fahrzeugs (10) durch eine Nutzereigabe erfasst und an einen Server (70) übermittelt. Die Steuereinheit (40, 84) empfängt ferner eine Nachricht von dem Server (70), welche Informationen zu einer an dem Fahrzeug (10) durchzuführenden Reinigung enthält. Die Erfindung betrifft ferner ein Verfahren eines Servers (70) zum Ermitteln einer Reinigung eines Fahrzeugs (10), wobei der Server Informationen zur Auslastung zumindest einer zur Reinigung eines Fahrzeugs (10) eingerichteten Servicestation (90) sowie zweite Informationen zu einer Verschmutzung eines Fahrzeugs (10) von einer Steuereinheit (40,84) empfängt. Der Server (70) ermittelt daraufhin dritte Informationen zu einer Reinigung des Fahrzeugs anhand der zweiten Informationen und der vierten Informationen und übermittelt die dritten Informationen an die Steuereinheit (40, 84). Die Erfindung betrifft ferner ein System zum Durchführen der erfindungsgemäßen Verfahren, aufweisend ein Fahrzeug (10), ein mobiles Endgerät (80); einen Server (70) und eine Servicestation (90).

## Beschreibung

Die Erfindung betrifft Verfahren zum Ermitteln einer Reinigung für ein Fahrzeug, insbesondere ein Verfahren einer Steuereinheit eines Fahrzeugs oder einer Steuereinheit eines mobilen Endgeräts und ein Verfahren eines Servers zum Ermitteln einer Reinigung für ein Fahrzeug. Die Erfindung betrifft ferner ein System zum Durchführen der erfindungsgemäßen Verfahren.

Heutige Fahrzeuge verfügen bereits über eine Vielzahl von Assistenzsystemen, die den Fahrer in einer Vielzahl von Fahrsituationen computerbasiert unterstützen. Solche Assistenzsysteme können auf Sensoren zum Erfassen einer Vielzahl von Messdaten zurückgreifen, welche die Sinnesfähigkeiten des Menschen bei weitem übersteigen. Zudem übertrifft die Geschwindigkeit dieser Assistenzsysteme die menschliche Reaktionszeit signifikant. Bekannte Fahrerassistenzsysteme sind beispielsweise Spurhalteassistenten, Bremsassistenten bei Fußgängererkennung und Abstandsregeltempomaten, insbesondere für Stausituationen.

Durch Anwendung solcher Assistenzsysteme geht die Autonomie des Fahrers bezüglich seiner Fahrentscheidungen zunehmend auf das Fahrzeug beziehungsweise in diesem operierende Steuereinheiten über. Am Ende dieser Entwicklungen steht ein autonom fahrendes Fahrzeug, welches vollständig ohne Eingriffe eines Menschen manövrieren kann. Mittels eines solchen autonom fahrenden Fahrzeugs ist ein vollautomatisierter Personentransport möglich. Bislang sind derartige autonom fahrenden Fahrzeuge in der Regel auf Einzelpersonen zugelassen und/oder besitzen ohne zusätzliche Überwachung durch einen Fahrer keine Straßenzulassung. Hinsichtlich von Wartung und Pflege unterscheiden sich diese autonom fahrenden Fahrzeuge somit wenig von anderen in Privatbesitz befindlichen Fahrzeugen. In der Regel werden sich der oder die Eigentümer um die Instandhaltung und Pflege des Fahrzeugs kümmern.

Bereits heutzutage existieren jedoch verschiedenste Mobilitätskonzepte, insbesondere in urbanen Ballungsräumen. Beim sogenannten Carsharing greifen dabei eine Vielzahl von Nutzern unabhängig voneinander und zeitlich begrenzt auf die Fahrzeuge einer Fahrzeugflotte zu. Indem die Flottenfahrzeuge nur für den Zeitraum der tatsächlichen Nutzung an einen bestimmten Nutzer gebunden sind, kann die ungenutzte Parkzeit der Fahrzeuge minimiert werden. Bei dezentralen Carsharing-Konzepten wird die Fahrzeugnutzung an beliebigen Punkten in einem Betriebsbereich des Flottenanbieters begonnen und beendet. Insbesondere dezentrale Carsharing-Konzepte haben das Potential die Anzahl der insgesamt benötigten Fahrzeuge deutlich zu minimieren, da ab einer ausreichenden Anzahl von Nutzern und Fahrzeugen die Flottenfahrzeuge in selbstorganisierter Weise und mit einer ausreichenden Dichte im Betriebsbereich zur Verfügung stehen werden. Sobald in einem bestimmten Bereich eine ausreichende Zahl autonom fahrender Fahrzeuge verfügbar sind, ist mit einer Zunahme von Carsharing-Konzepten und einer Abnahme von ausschließlich privat genutzten autonomen Fahrzeugen zu rechnen, da die Bereitstellung von autonomen Fahrzeugen auch an entlegeneren oder weniger frequentierten Orten sichergestellt werden kann.

Insbesondere bei dezentralen Carsharing-Konzepten stellt jedoch die Energieversorgung, Wartung und Pflege der Fahrzeuge eine Herausforderung dar. Zum einen können zum Betanken und Reinigen der Flottenfahrzeuge Angestellte des Flottenanbieters genutzt werden. Dies erhöht jedoch die Personalkosten und somit die Kosten des Carsharing-Konzepts signifikant. Alternativ können die Nutzer der autonomen Fahrzeuge durch entsprechende Incentives dazu veranlasst werden, jeweils notwendige Servicefahrten durchzuführen. Hierbei besteht jedoch das Risiko einer unzureichenden Wartung oder von Ausfällen der Fahrzeuge.

Über die die Betriebsfähigkeit der Einzelfahrzeug hinaus ist es ferner erforderlich, die Funktionalität der Flotte zu erhalten. Insbesondere die dezentralen Carsharing-Konzepte erfordern zu jeder Zeit eine bestimmte Mindestanzahl einsatzbereiter Fahrzeuge. Nur so kann eine ausreichende Verfügbarkeit von Fahrzeugen für die Nutzer sichergestellt werden.

Im Rahmen der vorliegenden Anmeldung wird unter Carsharing im Weiteren Sinne auch Ride-Pooling und Ride-Hailing verstanden. Eine autonome Fahrzeugflotte kann somit auch eine Flotte von Privatfahrzeugen sein, die nur zeitweise für Fahrdienstleistungen, insbesondere für autonome Fahrdienstleistungen, zur Verfügung gestellt werden. In diesen und gleichartigen Fällen ist unter einem Flottenbetreiber der Anbieter einer Anwendung zu verstehen, wobei die Anwendung zum Verbinden von Nutzern und Anbietern von Fahrdienstleistungen genutzt wird.

Der Erfindung liegt nun die Aufgabe zugrunde, die Probleme des Standes der Technik zu überwinden oder zumindest zu verringern und Verfahren zum Ermitteln einer Reinigung von Fahrzeugen zur Verfügung zu stellen, insbesondere für die Reinigung von autonomen Fahrzeugen, die in Carsharing-Konzepten oder von Einzelpersonen genutzt werden.

Die erfindungsgemäße Aufgabe wird gelöst durch ein Verfahren eine Steuereinheit, ein Verfahren eines Servers und ein System zum Durchführen der Verfahren gemäß den unabhängigen Patentansprüchen sowie den bevorzugte Weiterbildungen der Unteransprüche.

Ein erster Aspekt der vorliegenden Erfindung betrifft ein Verfahren einer Steuereinheit zum Ermitteln einer Reinigung eines Fahrzeugs, insbesondere eines zum autonomen Fahren ausgebildeten und in einem Betriebsbereich operierenden autonomen Fahrzeugs. Bevorzugt können die Fahrzeuge innerhalb des Betriebsbereichs von Nutzern für autonome Fahrdienstleistungen genutzt werden, unabhängig davon, ob es sich um Fahrzeuge eines Carsharing-Anbieters oder um private Fahrzeuge handelt. Zumindest in dem Betriebsbereich ist bevorzugt die für einen autonomen Fahrbetrieb der Fahrzeuge notwendige Infrastruktur vorhanden. Der Betriebsbereich weist ferner bevorzugt zumindest eine zur Durchführung einer Reinigung des Fahrzeugs ausgestattete Servicestation auf. Ferner ist zumindest ein Server eines Betreibers einer Flotte autonomer Fahrzeuge, eines Betreibers eines Reinigungsservice oder eines Fahrzeugherstellers für den Betriebsbereich vorgesehen. Das erfindungsgemäße Verfahren wird bevorzugt in einem derartigen Betriebsbereich realisiert. Besonders bevorzugt ist ein erfindungsgemäßes System, wie noch im Detail erläutert, im Betriebsbereich angeordnet.

Bei der das erfindungsgemäße Verfahren durchführenden Steuereinheit eines Fahrzeugs handelt es sich bevorzugt um eine Steuereinheit des Fahrzeugs selbst. Alternativ bevorzugt wird das erfindungsgemäße Verfahren von einer Steuereinheit eines mobilen Endgeräts, insbesondere eines mobilen Endgeräts eines Nutzers des Fahrzeugs, durchgeführt. Ebenfalls bevorzugt wird das Verfahren zum Teil von einer Steuereinheit des Fahrzeugs und zum Teil von einer Steuereinheit des mobilen Endgeräts durchgeführt. Gemäß dieser besonders bevorzugten Durchführungsform besteht bevorzugt eine Kommunikationsverbindung zwischen der Steuereinheit des Fahrzeugs und der Steuereinheit des mobilen Endgeräts, besonders bevorzugt vermittelt durch entsprechende Kommunikationsmodule des Fahrzeugs und des mobilen Endgeräts. Im Folgenden wird für die einzelnen Verfahrensschritte jeweils spezifiziert, von welcher Steuereinheit dieser Schritt bevorzugt durchgeführt wird.

In einem ersten Schritt des erfindungsgemäßen Verfahrens einer Steuereinheit wird anhand erster Informationen ein Reinigungsbedarfs des Fahrzeugs anhand erster Informationen ermittelt. Der Reinigungsbedarf charakterisiert dabei noch nicht die Verschmutzung des Fahrzeugs oder die Art der durchzuführenden Reinigung sondern zeigt lediglich den prinzipiellen Bedarf einer Reinigung des Fahrzeugs an. Gemäß einer bevorzugten Durchführungsform werden die ersten Informationen in regelmäßigen Abständen von der Steuereinheit selbst erzeugt, beispielsweise analog zu Wartungs- oder Serviceintervallen. Ebenfalls bevorzugt werden die ersten Informationen von einem Server empfangen, wobei der Server die ersten Informationen ebenfalls in regelmäßigen Abständen erzeugen kann. Alternativ bevorzugt basieren die ersten Informationen auf einer Nutzereingabe, die beispielsweise via eine Schnittstelle des Kombiinstruments des Fahrzeugs oder des mobile Endgeräts erfolgt.

In einem nächsten Schritt des erfindungsgemäßen Verfahrens wird zumindest eine Eingabeaufforderung an einen Nutzer ausgegeben, mit der dieser aufgefordert wird, eine Nutzereingabe vorzunehmen. Die Eingabeaufforderung spezifiziert dabei bevorzugt, die vom Nutzer einzugebenden Informationen und/oder die vom Nutzer für die Eingabe zu verwendende Nutzerschnittstelle. Die Eingabeaufforderung kann dabei auf derselben oder einer anderen Nutzerschnittstelle erfolgen, als die geforderte Nutzereingabe. Zum Beispiel kann auf einem Kombiinstrument eines Fahrzeugs eine Aufforderung zur Eingabe mittels eines mobilen Endgeräts erfolgen oder umgekehrt auf einem Bildschirm eines mobilen Endgeräts eine Aufforderung zur Eingabe mittels eines Kombiinstrument eines Fahrzeugs erfolgen.

In Reaktion auf die Eingabeaufforderung wird in einem nächsten Schritt des erfindungsgemäßen Verfahrens eine Nutzereingabe erfasst. Die Nutzereingabe erfolgt dabei bevorzugt via eine in der Eingabeaufforderung spezifizierte Nutzerschnittstelle. Die Nutzereingabe enthält ferner bevorzugt in der Eingabeaufforderung spezifizierte Informationen. Mittels der Nutzereingabe werden zweite Informationen zu einer Verschmutzung des Fahrzeugs erfasst. Bevorzugte Formen zweiter Informationen werden im Folgenden im Detail erläutert.

Die erfassten zweiten Informationen werden im erfindungsgemäßen Verfahren an einen Server übermittelt. Bei dem Server handelt es sich bevorzugt um einen Server eines Flottenbetreibers einer autonomen Fahrzeugflotte. Ebenfalls bevorzugt handelt es sich um einen Server eines Reinigungsdienstanbieters beziehungsweise Betreibers einer Servicestation, wie unten im Detail erläutert. Ebenfalls bevorzugt handelt es sich um einen Server eines Fahrzeugherstellers. Die Übermittlung der zweiten Informationen erfolgt bevorzugt mittels entsprechender Kommunikationsmodule des Fahrzeugs beziehungsweise mobilen Endgeräts und des Server.

Im erfindungsgemäßen Verfahren wird ferner eine Nachricht von dem Server empfangen, die dritte Informationen zu einer an dem Fahrzeug durchzuführenden Reinigung enthalten. Die dritten Informationen enthalten dabei insbesondere eine Reinigungsentscheidung, die festlegt, ob eine Reinigung des Fahrzeugs tatsächlich erfolgen soll. Bevorzugt spezifizieren die dritten Informationen ferner die durchzuführende Reinigung. Bevorzugt spezifizieren die dritten Informationen ferner den Ort an dem die Reinigung durchzuführen ist, insbesondere eine (Position einer) Servicestation, die zum Durchführen der Reinigung ausgewählt wurde. Weitere Detail zu den dritten Informationen werden untenstehend im Zusammenhang mit dem erfindungsgemäßen Verfahren des Servers erläutert. In einer besonders bevorzugten Durchführungsform kontrolliert die Steuereinheit ein Fahrsystems des Fahrzeugs für eine autonome Fahrt zu einer in den dritten Informationen spezifizierten Servicestation.

Das erfindungsgemäße Verfahren ermöglicht vorteilhaft das Ermitteln einer Reinigung eines Fahrzeugs durch einen Server, wobei dem Server ausreichend Informationen für eine qualifizierte Entscheidung zur Verfügung stehen. Somit kann stets ein sauberes Erscheinungsbild der Fahrzeuge gewährleistet sowie mit Verschmutzungen zusammenhängenden Schäden am Fahrzeug (Flugrost) vermieden werden. Insbesondere im Hinblick auf Carsharing-Anbieter bleibt durch das bedarfsgerechte Reinigen der Fahrzeuge deren kommerzielle Einsatzfähigkeit auf eine kostengünstige Weise erhalten.

In einer bevorzugten Durchführungsform des erfindungsgemäßen Verfahrens fordert die Eingabeaufforderung spezifisch zur Eingabe der Art einer Verschmutzung des Fahrzeugs auf. Bevorzugt fordert die Eingabeaufforderung zu einer Auswahl zwischen einer Außenreinigung, Innenreinigung, Unterbodenreinigung, Polsterreinigung, etc. auf. Ebenfalls bevorzugt fordert die Eingabeaufforderung spezifisch zur Eingabe des Orts einer Verschmutzung des Fahrzeugs auf. Bevorzugt ist beispielsweise ein bestimmter Fahrzeugsitz oder ein Karosseriebereich, auf dem sich jeweils eine Verschmutzung befindet, anzugeben. Ferner bevorzugt fordert die Eingabeaufforderung spezifisch zur Eingabe des Grads einer Verschmutzung des Fahrzeugs auf. Bevorzugt wird dem Fahrer eine Auswahl, beispielsweise in Form einer Skala, vorgegeben, anhand der ein Nutzer den Grad der Verschmutzung eingeben kann. Gemäß dieser Durchführungsform weisen die zweiten Informationen bevorzugt dann der Eingabeaufforderung entsprechende Angaben zu Art, Ort und/oder Grad einer Verschmutzung auf.

In einer ebenfalls bevorzugten Durchführungsform des erfindungsgemäßen Verfahrens fordert Eingabeaufforderung einen Nutzer zur Aufnahme zumindest eines Fotos von dem Fahrzeug auf. In Abhängigkeit der das Verfahren durchführenden Steuereinheit kann die Eingabeaufforderung dabei auf dem Kombiinstrument des Fahrzeugs oder einem Display des mobilen Endgerät erfolgen. Die Eingabeaufforderung wird in der Regel dazu auffordern, ein Foto mit dem mobilen Endgerät, bevorzugt dem verbundenen mobilen Endgerät, aufzunehmen. Gemäß dieser Durchführungsform weisen die zweiten Informationen entsprechend zumindest ein Foto des Fahrzeugs auf. Führt die Fahrzeugsteuereinheit entsprechende Schritte des Verfahrens durch, wird das Foto von dem mobilen Endgerät an das Fahrzeug übermittelt.

In einer ebenfalls bevorzugten Durchführungsform fordert die Eingabeaufforderung zur Eingabe von die Nutzung des Fahrzeugs betreffenden Informationen auf. Gemäß dieser Durchführungsform charakterisieren die zweiten Informationen eine erfolgte Nutzung des Fahrzeugs, beispielsweise indem sie Informationen zum Transport von Tieren, Kindern oder Sportfans aufweisen. Anhand der Nutzungsinformation lassen sich im weiteren Verlauf mit der jeweiligen Nutzungsart verbundene typische Verschmutzungen und schließlich die dafür geeigneten Reinigungsmethoden ermitteln. Die Informationen werden vom Fahrzeug an das mobile Endgerät zum Weiterleiten an den Server oder direkt an den Server übermittelt.

In einer ebenfalls bevorzugten Durchführungsform des erfindungsgemäßen Verfahrens weisen die zweiten Informationen ferner vom Fahrzeug selbst erfasste Informationen zur Verschmutzung des Fahrzeugs auf. Das Fahrzeug weist hierfür bevorzugt zumindest einem zum Erfassen von Fahrzeugdaten ausgebildeten zweiten Sensor auf. Bei dem Sensor handelt es sich bevorzugt um einen Innenraumkamera zum Erfassen eines Verschmutzungsgrads eines Innenraums. Ebenfalls bevorzugt handelt es sich um eine zum Erfassen von Bildsignalen der Karosserieoberfläche des Fahrzeugs ausgebildete Kamera, beispielsweise um eine am Dashboard oder Rückspiegel angeordnete und auf die Motorhaube gerichtete Kamera oder um eine am Seitenspiegel und auf den Kotflügel oder die Tür gerichtete Kamera. Ebenfalls bevorzugt handelt es sich um Sensoren zum Erfassen eines Reflektionsgrades des Fahrzeuglacks. Ebenfalls bevorzugt handelt es sich um einen Sensor zum Erfassen von Partikeln in der Innenraumluft. Die Informationen werden vom Fahrzeug an das mobile Endgerät zum Weiterleiten an den Server oder direkt an den Server übermittelt.

Ein weiterer Aspekt der vorliegenden Erfindung betrifft ein Verfahren eines Servers zum Ermitteln einer Reinigung eines Fahrzeugs. Bei dem Server handelt es sich bevorzugt um den Server eines Betreibers einer Flotte autonomer Fahrzeuge, um den Server eines Betreibers eines Reinigungsservice oder um den Service eines Fahrzeugherstellers. Der Server weist insbesondere eine Steuereinheit und ein zum Herstellen zumindest einer Kommunikationsverbindung eingerichtetes (viertes) Kommunikationsmodul auf.

In einem Schritt des erfindungsgemäßen Verfahrens eines Server empfängt dieser vierte Informationen zur Auslastung zumindest einer zur Reinigung eines Fahrzeugs eingerichteten Servicestation. Bei der Servicestation handelt es sich bevorzugt um eine zur autonomen Reinigung von Fahrzeugen ausgebildeten Servicestation mit einer Steuereinheit, einem Kommunikationsmodul und zumindest einem Servicemodul. Bevorzugt handelt es sich um zumindest eine von einer Vielzahl im Betriebsbereich angeordneter Servicestationen. Bevorzugt empfängt der Server vierte Informationen zur Auslastung einer Vielzahl von zur Reinigung eines Fahrzeugs eingerichteten Servicestationen des Betriebsbereiches.

Bevorzugt enthalten die vierten Informationen ferner Angaben zur Ausstattung zumindest einer Servicestation, insbesondere zu in der Servicestation vorhandenen Servicemodulen. Die Servicemodule sind dabei jeweils zum Durchführen einer bestimmten Reinigungsprozedur ausgebildet und charakterisieren somit die Reinigungsmöglichkeiten einer Servicestation. Alternativ bevorzugt liegen die Informationen zur Ausstattung der Servicestation in dem Server vor, da diese im Gegensatz zu den Daten zur Auslastung der Servicestation fix sind.

Ferner empfängt der Server zweite Informationen zu einer Verschmutzung eines Fahrzeugs wie obenstehend beschrieben von einer Steuereinheit, insbesondere von einer Steuereinheit des Fahrzeugs beziehungsweise von der Steuereinheit eines mobilen Endgeräts. Die zweiten Informationen enthalten dabei bevorzugt Angaben zu Art, Ort und/oder Grad der Verschmutzung sowie zumindest ein Foto des Fahrzeugs, wie obenstehend beschrieben.

Anhand der zweiten Informationen und der vierten Informationen ermittelt der Server im erfindungsgemäßen Verfahren dritte Informationen zu einer Reinigung des Fahrzeugs. Insbesondere ermittelt der Server Informationen zu einer Art und einem Grad der Reinigung anhand der zweiten Informationen. Die zweiten Informationen zu einer Verschmutzung des Fahrzeugs sind bevorzugt eine Information zu einer Zustandseigenschaft des Fahrzeugs, die angibt, dass und inwiefern ein Ist-Zustand der Verschmutzung des Fahrzeugs von einem Soll-Zustand desselben abweicht, wobei der Soll-Zustand generell oder für ein bestimmtes Fahrzeug gilt. Eine Reinigung beschreibt in allgemeinster Form eine Einwirkung auf das Fahrzeug, um dieses von dem vorliegenden Ist-Zustand der Verschmutzung in einen gewünschten Soll-Zustand zu überführen. Der Server ermittelt also bevorzugt eine Reinigung, die angesichts des Ist-Zustands zum Herstellen des gewünschten Soll-Zustands geeignet ist.

Die vierten Informationen nutzt der Server dabei, um die Auslastung der einzelnen Servicestation sowie gegebenenfalls die Ausstattung der einzelnen Servicestationen zu berücksichtigen. Die dritten Informationen enthalten bevorzugt Angaben zu einer für das Durchführen der ermittelten Reinigung ausgewählten Servicestation. Diese Auswahl trifft der Server bevorzugt unter Berücksichtigung der Auslastung und Ausstattung der Servicestationen. Bevorzugt enthalten die dritten Informationen Angaben zu einer aufgrund der zweiten Informationen bestimmten notwendigen und angesichts der vierten Informationen bestimmten durchführbaren Reinigung durch eine im Betriebsbereich angeordnete Servicestation.

Der Server übermittelt ferner die ermittelten dritten Informationen an die Steuereinheit des Fahrzeugs und/oder an die Steuereinheit des mobilen Endgeräts. Somit wird die Steuereinheit vorteilhaft über eine am Fahrzeug durchzuführende Reinigung informiert. Bevorzugt übermittelt der Server die dritten Informationen an die Steuereinheit, von der die zweiten Informationen empfangen wurden. Ebenfalls bevorzugt übermittelt der Server die dritten Informationen stets (auch) an die Steuereinheit des betreffenden Fahrzeugs, damit dieses vorteilhaft die Informationen zur durchzuführenden Reinigung und besonders bevorzugt zur ausgewählten Servicestation enthält. Somit kann das Fahrzeug zur ausgewählten Servicestation navigieren.

Das erfindungsgemäße Verfahren ermöglicht vorteilhaft das Ermitteln einer Reinigung eines Fahrzeugs durch einen Server, wobei dem Server stets ausreichend Informationen für eine qualifizierte Entscheidung zur Verfügung stehen. Somit kann stets ein sauberes Erscheinungsbild der Fahrzeuge gewährleistet sowie mit Verschmutzungen zusammenhängenden Schäden am Fahrzeug (Flugrost) vermieden werden. Insbesondere im Hinblick auf Carsharing-Anbieter bleibt durch das bedarfsgerechte Reinigen der Fahrzeuge deren kommerzielle Einsatzfähigkeit auf eine kostengünstige Weise erhalten.

In einer bevorzugten Durchführungsform des erfindungsgemäßen Verfahrens ermittelt der Server die dritten Informationen zudem anhand von empfangen oder abgerufenen weiteren externen Informationen, wobei es sich bevorzugt um fahrerunspezifische sowie fahrzeugunspezifische Informationen handelt. Die externen Informationen charakterisieren bevorzugt Rahmenbedingungen, die eine spezielle Verschmutzung mit einer bestimmten Wahrscheinlichkeit bewirken können. Beispielsweise enthalten die externen Informationen Daten zum Wetter, zur Jahreszeit, zu jahreszeitlich bedingten Allergenen oder zum Vorherrschen einer Grippewelle. Die externen Informationen sind dazu geeignet, entsprechende Gegenmaßnahmen einzuleiten, wie eine Unterbodenwäsche zur Streusalzentfernung, eine Polsterdesinfektion zur Grippesaison oder eine Reinigung eines Pollenfilters.

Ebenfalls bevorzugt erfolgt im erfindungsgemäßen Verfahren des Servers ferner das Erzeugen erster Informationen zu einem Reinigungsbedarf eines Fahrzeugs. Besonders bevorzugt werden die ersten Informationen für ein bestimmtes Fahrzeug bevorzugt in festen Intervallen erzeugt, beispielsweise analog zu Service - oder Wartungsintervallen. Ebenfalls bevorzugt berücksichtigt der Server jedoch bereits beim Bestimmen der ersten Informationen die Auslastung der Servicestationen gemäß der vierten Informationen. Beispielsweise kann innerhalb eines Toleranzbereichs um das Ende eines festen Reinigungsintervalls eine Reinigung jederzeit erfolgen, wenn eine Auslastung der Servicestationen es zulässt. Gemäß dieser Durchführungsform übermittelt der Server die ersten Informationen an die Steuereinheit.

In einer ebenfalls bevorzugten Durchführungsform des erfindungsgemäßen Verfahrens übermittelt der Server die dritten Informationen ferner an eine zur Durchführung der ermittelten Reinigung ausgewählte Servicestation. Somit wird die ausgewählte Servicestation über eine darin durchzuführende Reinigung informiert, insbesondere darüber, dass eine bestimmte Reinigung an einem bestimmten Fahrzeug durchzuführen ist. Somit kann die Servicestation dem eintreffenden Fahrzeug vorteilhaft die entsprechende Reinigung zuordnen. Ebenfalls bevorzugt enthalten die dritten Informationen ferner Terminierungsinformationen für die durchzuführende Reinigung, so dass die Steuereinheit und das Fahrzeug über den Termin der durchzuführenden Reinigung informiert werden. Gemäß dieser Durchführungsform enthalten die zweiten Informationen bevorzugt Angaben zu dem Fahrzeug oder werden solche Informationen durch den Server von der Steuereinheit, bevorzugt der Steuereinheit des Fahrzeugs angefragt. Der Server leitet die Informationen zum Fahrzeug bevorzugt an die Servicestation weiter, so dass diese die durchzuführende Reinigung gegebenenfalls für das betreffende Fahrzeug anpassen kann, beispielsweise hinsichtlich Polster oder Leder.

Wie bereits vorstehend beschrieben, weisen die dritten Informationen bevorzugt Angaben zu einer zur Durchführung der ermittelten Reinigung ausgewählten Servicestation auf. Insbesondere weisen die dritten Informationen eine Position der ausgewählten Servicestation auf. Ferner bevorzugt weisen die dritten Informationen Angaben zu in der ausgewählten Servicestation vorhandenen Servicemodulen beziehungsweise verfügbaren Services. Bevorzugt kann ein Nutzer anhand der Angaben in den dritten Informationen gegebenenfalls weitere Reinigungs- oder Pflegeoptionen, wie beispielsweise einen Wachsauftrag eine Lackversiegelung oder dergleichen, auswählen. Bevorzugt wird hierzu im Verfahren der Steuereinheit eine entsprechende Information und Eingabeaufforderung ausgegeben, eine Nutzereingabe erfasst und an den Server zur Weiterleitung an die Servicestation übermittelt. Ebenfalls bevorzugt erhält der Server bereits zuvor Informationen zu einem Kundenwunsch von der Steuereinheit und berücksichtigt diese beim Ermitteln der durchzuführenden Reinigung, insbesondere beim Ermitteln einer dafür geeigneten Servicestation.

Ebenfalls bevorzugt empfängt oder ermittelt der Server im erfindungsgemäßen Verfahren Informationen zu einer voraussichtlichen Dauer beziehungsweise den voraussichtlichen Kosten der ermittelten Reinigung und fügt diese Informationen den an die Steuereinheit übermittelten dritten Information zu. Somit kann gegebenenfalls ein Nutzer eine abschließende Entscheidung über die tatsächliche Durchführung der Reinigung treffen. Bevorzugt wird hierzu im Verfahren der Steuereinheit eine entsprechende Information und Eingabeaufforderung ausgegeben, eine Nutzereingabe erfasst und an den Server übermittelt. Beispielsweise kann ein Nutzer des Fahrzeugs einen Zeitraum spezifizieren, zu dem das Fahrzeug von dem Nutzer benötigt und das Durchführen einer Reinigung somit nicht möglich ist.

Die Verfahrensschritte der erfindungsgemäßen Verfahren können durch elektrische oder elektronische Bauteile oder Komponenten (Hardware), durch Firmware (ASIC) implementiert sein oder durch beim Ausführen eines geeigneten Programms (Software) verwirklicht werden. Ebenfalls bevorzugt werden die erfindungsgemäßen Verfahren durch eine Kombination von Hardware, Firmware und/oder Software verwirklicht, beziehungsweise implementiert. Beispielsweise sind einzelne Komponenten zum Durchführen einzelner Verfahrensschritte als separat integrierter Schaltkreis ausgebildet oder auf einem gemeinsamen integrierten Schaltkreis angeordnet. Einzelne zum Durchführen einzelner Verfahrensschritte eingerichtete Komponenten sind ferner bevorzugt auf einem (flexiblen) gedruckten Schaltungsträger (FPCB/PCB), einem Tape Carrier Package (TCP) oder einem anderen Substrat angeordnet.

Die einzelnen Verfahrensschritte der erfindungsgemäßen Verfahren sind ferner bevorzugt als ein oder mehrere Prozesse ausgebildet, die auf einem oder mehreren Prozessoren in einem oder mehreren elektronischen Rechengeräten laufen und beim Ausführen von ein oder mehreren Computerprogrammen erzeugt werden. Die Rechengeräte sind dabei bevorzugt dazu ausgebildet mit anderen Komponenten, beispielsweise einem Kommunikationsmodul sowie ein oder mehreren Sensoren beziehungsweise Kameras, zusammenzuarbeiten, um die hierin beschriebenen Funktionalitäten zu verwirklichen. Die Anweisungen der Computerprogramme sind dabei bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen abgelegt sein.

Dem Fachmann ist ferner ersichtlich, dass die Funktionalitäten von mehreren Computern (Datenverarbeitungsgeräten) kombiniert oder in einem einzigen Gerät kombiniert sein können oder dass die Funktionalität von einem bestimmten Datenverarbeitungsgerät auf eine Vielzahl von Geräten verteilt vorliegen kann, um die Schritte der erfindungsgemäßen Verfahren auszuführen, ohne von den zuvor beschriebenen erfindungsgemäßen Verfahren abzuweichen.

Ein weiterer Aspekt der vorliegenden Erfindung betrifft ein System zum Durchführen der erfindungsgemäßen Verfahren einer Steuereinheit und eines Servers, wie oben beschrieben.

Das erfindungsgemäße System weist dazu zumindest ein Fahrzeug mit einer Steuereinheit auf, die zum Durchführen des erfindungsgemäßen Verfahrens einer Steuereinheit eingerichtet ist. Das zumindest eine Fahrzeug ist bevorzugt zumindest ein autonom fahrendes Fahrzeug und weist ferner zumindest einer Schnittstelle zum Erfassen einer Nutzereingabe und einem zum Herstellen zumindest einer Kommunikationsverbindung eingerichteten ersten Kommunikationsmodul auf. Bevorzugt weist das System eine Mehrzahl solcher Fahrzeuge auf. Bevorzugt weist jedes Fahrzeug zumindest einen zum Erfassen von Umgebungsdaten ausgebildeten ersten Sensor, zumindest einen zum Erfassen von Fahrzeugdaten ausgebildeten zweiten Sensor und ein zum Durchführen autonomer Fahrmanöver ausgebildetes Fahrsystem auf. Bei der Schnittstelle handelt es sich bevorzugt um ein Kombiinstrument des Fahrzeugs, besonders bevorzugt um einen Touchscreen des Kombiinstruments des Fahrzeugs.

Das erfindungsgemäße System weist ferner zumindest eine in dem Betriebsbereich angeordnete Servicestation auf, welche zumindest eine Steuereinheit und ein zum Herstellen zumindest einer Kommunikationsverbindung eingerichtetes zweites Kommunikationsmodul aufweist. Die Servicestation weist ferner ein zum Durchführen einer Innenraumreinigung des Fahrzeugs ausgebildeten erstes Servicemodul oder ein zum Durchführen einer Außenreinigung des Fahrzeugs ausgebildetes zweiten Servicemodul auf. Bevorzugte Ausgestaltungen der zumindest einen Servicestation sind im Folgenden noch im Detail beschrieben.

Das erfindungsgemäße System weist ferner bevorzugt ein mobiles Endgerät, bevorzugt ein Smartphone eines Nutzers eines des zumindest einen autonomen Fahrzeugs, auf. Das mobile Endgerät weist zumindest eine Steuereinheit auf, die insbesondere zum Durchführen des erfindungsgemäßen Verfahrens einer Steuereinheit eingerichtet ist. Das mobile Endgerät weist ferner einen zumindest einem Touchscreen oder eine äquivalente Nutzerschnittstelle auf. Ferner weist das mobile Endgerät ein zum Herstellen zumindest einer Kommunikationsverbindung eingerichtetes drittes Kommunikationsmodul auf.

Das erfindungsgemäße System weist ferner einen Server, insbesondere einen Server eines Flottenbetreibers einer autonomen Fahrzeugflotte, einen Server eines

Reinigungsdienstanbieters beziehungsweise Betreibers einer Servicestation oder einen Server eines Fahrzeugherstellers auf. Der Server weist eine zum Durchführen des erfindungsgemäßen Verfahrens eines Servers eingerichtete Steuereinheit und einem zum Herstellen zumindest einer Kommunikationsverbindung eingerichtetes viertes Kommunikationsmodul auf. Darüber hinaus kann der Server weitere Komponenten, beispielsweise Speicher etc., aufweisen.

Bei der Servicestation des erfindungsgemäßen Systems handelt es sich bevorzugt um eine zum autonomen Reinigen eines Fahrzeugs eingerichtete und ausgebildete Servicestation. Das zweite Kommunikationsmodul ist insbesondere für die Kommunikation mit dem Server, dem Fahrzeug und dem mobilen Endgerät eingerichtet. Das zweite Kommunikationsmodul ist beispielsweise ein WLAN- oder Mobilfunk-Modul und ist vorzugsweise zum Durchführen einer Car2X-Kommunikation ausgebildet. Dasselbe gilt im Wesentlichen für das erste, dritte und vierte Kommunikationsmodul. Besonders bevorzugt sind das erste bis vierte Kommunikationsmodul dazu ausgebildet, entsprechend eines gemeinsamen Kommunikationsprotokolls zu kommunizieren.

Das erste Servicemodul der Servicestation ist besonders bevorzugt als Roboter ausgebildet oder weist Robotik auf. Das zweite Servicemodul ist bevorzugt wie eine bekannte automatische Waschstraße ausgebildet. Somit ist die Servicestation vorteilhaft zum autonomen Durchführen einer Fahrzeuginnenreinigung und Fahrzeugaußenreinigung ausgebildet.

Bei dem ersten Servicemodul handelt es sich bevorzugt um einen Roboterarm, der zur Innenraumreinigung des Fahrzeugs geeignete Werkzeuge trägt. Der Roboterarm ist bevorzugt dazu ausgebildet, durch eine geöffnete Tür oder ein geöffnetes Fenster des Fahrzeugs in den Fahrzeuginnenraum eingeführt zu werden. Bei den Werkzeugen handelt es sich besonders bevorzugt um eine Staubsaugerdüse, eine Polsterbürste, einen Applikator zum Auftrag von Reinigungsmittel und/oder Mittel zur Ablagen- und/oder Scheibenreinigung. In einer alternativ bevorzugten Ausführungsform weist das erste Servicemodul einen mobilen Reinigungsroboter auf, der dazu ausgebildet ist, durch eine geöffnete Tür oder ein geöffnetes Fenster des Fahrzeugs in einen Fahrzeuginnenraum einzudringen. Der mobile Reinigungsroboter weist ferner bevorzugt zur Innenraumreinigung geeignete Werkzeuge, wie besonders bevorzugt eine Staubsaugerdüse, eine Polsterbürste, Mittel zum Auftrag von Reinigungsmittel und/oder Mittel zur Ablagen- oder Scheibenreinigung auf. Der mobile Reinigungsroboter ist dazu ausgebildet eine autonome Innenraumreinigung bei geschlossenen Türen und Fenstern durchführen.

Das zweite Servicemodul ist bevorzugt als automatische Waschstraße ausgebildet und weist bevorzugt zumindest einen Applikator zum Auftrag von zumindest einer Reinigungsflüssigkeit, rotierende Bürsten und/oder an schwenkbaren Lappenträgern befestigte Lappen zum Abtrag von Schmutz von dem Fahrzeug und/oder einen Fön zum Trocknen des Fahrzeugs auf. Besonders bevorzugt weist das zweite Servicemodul darüber hinaus weitere Waschelemente, wie beispielsweise speziell zur Felgenwäsche ausgebildete Bürsten, und/oder Mittel zum Wachsauftrag, auf. Bevorzugt weist das zweite Servicemodul ferner Mittel zum Transport des Fahrzeugs in dem Servicemodul auf.

Die Servicestation weist bevorzugt ein den Servicemodulen vorgelagertes erstes Kontrollmodul mit zumindest einem dritten Sensor auf, wobei der dritte Sensor zum Erfassen zumindest einer einen Verschmutzungsgrad des Fahrzeugs charakterisierenden Größe ausgebildet ist. Mit anderen Worten ist das erste Kontrollmodul dazu ausgebildet (eingerichtet), einen Verschmutzungsgrad des Fahrzeugs zu detektieren. Die Servicestation weist ferner bevorzugt ein den Servicemodulen nachgelagertes zweites Kontrollmodul mit zumindest einem vierten Sensor auf, wobei der vierte Sensor zum Erfassen zumindest einer den Verschmutzungsgrad des Fahrzeugs charakterisierenden Größe ausgebildet ist. Somit ist das zweite Kontrollmodul ebenfalls dazu ausgebildet, einen Verschmutzungsgrad des Fahrzeugs zu detektieren.

Ferner bevorzugt weist die Servicestation ein zum Befüllen eines Energiespeichers des Fahrzeugs ausgebildetes drittes Servicemodul auf. Das dritte Servicemodul ist besonders bevorzugt dazu ausgebildet, ein Batteriesystem des Fahrzeugs zu laden oder einen Kraftstofftank des Fahrzeugs zu füllen. Ebenfalls bevorzugt weist die Servicestation ein zum Durchführen einer Wartung und/oder einer Reparatur des Fahrzeugs ausgebildetes viertes Servicemodul auf. Das vierte Servicemodul ist besonders bevorzugt dazu ausgebildet, Betriebsflüssigkeiten des Fahrzeugs, wie beispielsweise Kühlflüssigkeit, Bremsflüssigkeit, Wischwasser oder dergleichen aufzufüllen. Alternativ oder zusätzlich ist das vierte Servicemodul dazu ausgebildet, Verschleißteile des Fahrzeugs auszutauschen, wie beispielsweise Bremsbeläge, Wischerblätter, Luftfilter oder dergleichen.

Ebenfalls bevorzugt weist die Servicestation ein zum Be- und/oder Entladen des Fahrzeugs ausgebildetes Logistikmodul auf. Das Logistikmodul ist bevorzugt dazu ausgebildet, bestellte Waren oder Güter in ein Fahrzeug zu laden. Somit können Bestellungen eines Nutzers, der ein autonomes Fahrzeug angefragt hat, in dieses Fahrzeug geladen werden, bevor es die autonome Fahrt zu dem Nutzer antritt. Alternativ oder zusätzlich können aus einem von einer Fahrt mit einem bestimmten Nutzer zurückkehrenden Fahrzeug Waren oder Güter mittels des Logistikmoduls entnommen werden. Diese Waren oder Güter sind dabei beispielsweise zum Transport an weiter entfernte Orte vorgesehen und werden in der Servicestation gesammelt, um schließlich an ein Logistikunternehmen übergeben werden zu können. Ebenfalls bevorzugt weist die Servicestation Stellplätze für nicht im Betrieb befindliche autonome Fahrzeuge auf. Somit können diese autonomen Fahrzeuge in der Servicestation sicher verwahrt werden. Ferner ist somit eine effektive Kontrolle der Anzahl im Betriebsbereich befindlicher Fahrzeuge möglich. Somit kann die Dichte der Fahrzeuge im Betriebsbereich angepasst werden.

In einer bevorzugten Ausführungsform der Servicestation des erfindungsgemäßen Systems sind das erste, das zweite und gegebenenfalls weitere Servicemodule in einem gemeinsamen Bereich der Servicestation angeordnet. Besonders bevorzugt sind alle Servicemodule in der Servicestation derart angeordnet, dass sie ihre Funktionen an einem in der ersten Servicestation befindlichen Fahrzeug durchführen können, ohne dass eine Bewegung des Fahrzeugs in der Servicestation notwendig ist. In einer solchen Servicestation werden eine Innenraumreinigung und eine Außenreinigung vorteilhaft sequentiell oder parallel an einem in der Servicestation an einer festen Position befindlichen Fahrzeug durchgeführt.

In einer ebenfalls bevorzugten Ausführungsform der Servicestation sind das erste Servicemodul und das zweite Servicemodul und gegebenenfalls weitere Servicemodule in verschiedenen Bereichen der Servicestation angeordnet. Gemäß dieser Ausführungsform ist somit eine Bewegung des Fahrzeugs zwischen der Durchführung der einzelnen Reinigungen erforderlich. Gemäß einer besonders bevorzugten Ausführungsform sind alle Servicemodule separat voneinander in der Servicestation angeordnet, die Servicestation ist mithin vollständig modular aufgebaut. In jedem der Servicemodule erfolgt die entsprechende Reinigung und anschließend erfolgt eine Bewegung des Fahrzeugs zum nächsten Modul. Die Bewegung des Fahrzeugs zwischen den Modulen wird bevorzugt durch ein Gebäudeleitsystem vermittelt.

Ein weiterer Aspekt der Erfindung betrifft ein Computerprogramm, umfassend Befehle, die bei der Ausführung des Programms durch einen Computer diesen veranlassen, das erfindungsgemäße Verfahren einer Steuereinheit auszuführen. Ein weiterer Aspekt der Erfindung betrifft ein computerlesbares Speichermedium, umfassend Befehle, die bei der Ausführung durch einen Computer diesen veranlassen, das erfindungsgemäße Verfahren einer Steuereinheit auszuführen. Ein weiterer Aspekt der Erfindung betrifft ein Computerprogramm, umfassend Befehle, die bei der Ausführung des Programms durch einen Computer diesen veranlassen, das erfindungsgemäße Verfahren eines Server auszuführen. Ein weiterer Aspekt der Erfindung betrifft ein computerlesbares Speichermedium, umfassend Befehle, die bei der Ausführung durch einen Computer diesen veranlassen, das erfindungsgemäße Verfahren eines Servers auszuführen.

Weitere bevorzugte Ausgestaltungen der Erfindung ergeben sich aus den übrigen, in den Unteransprüchen genannten Merkmalen. Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines erfindungsgemäßen Systems zur Durchführung des erfindungsgemäßen Verfahrens aus einem autonomen Fahrzeug, einem Server, einem mobilen Endgerät und Servicestationen;
- Figur 2: eine schematische Darstellung eines Betriebsbereichs zur Durchführung der erfindungsgemäßen Verfahren mittels des in Figur 1 dargestellten Systems;
- Figur 3: eine schematische Darstellung eines erstes Servicemoduls zur Innenraumreinigung des Fahrzeugs;
- Figur 4: eine schematische Darstellung eines zweiten Servicemoduls zur Außenreinigung des Fahrzeugs;
- Figur 5: eine schematische Darstellung einer Servicestation gemäß einer ersten Ausführungsform;
- Figur 6: eine schematische Darstellung einer Servicestation gemäß einer zweiten Ausführungsform; und
- Figur 7: ein schematisches Ablaufdiagram eines Verfahrens zur autonomen Reinigung eines Fahrzeugs gemäß einer Durchführungsform.

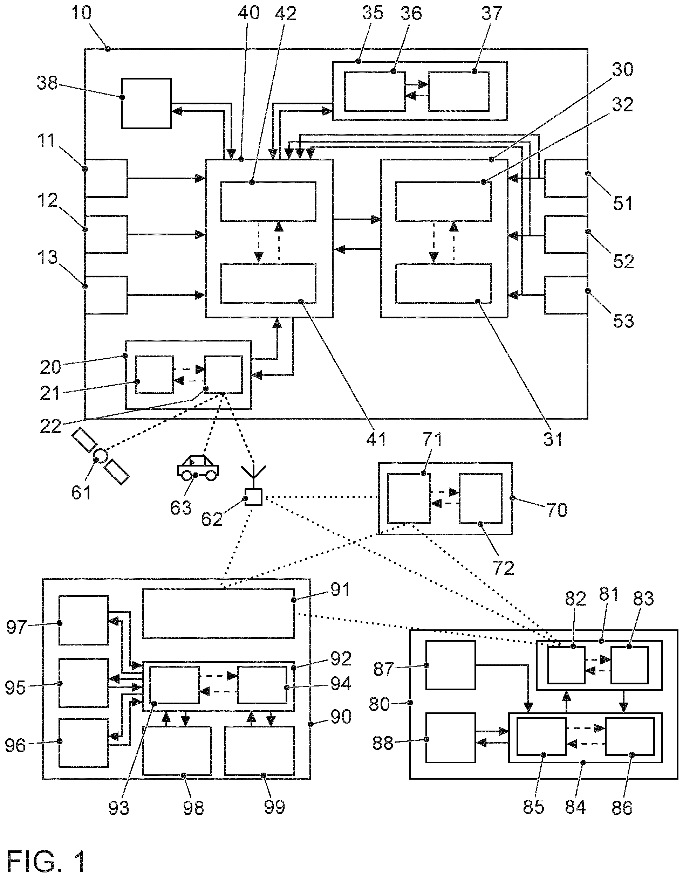

Figur 1 zeigt eine schematische Darstellung eines erfindungsgemäßen Systems zur Durchführung des erfindungsgemäßen Verfahrens, aufweisend ein autonomes Fahrzeug 10, einen Server 70, ein mobiles Endgerät 80 und eine Servicestation 90.

In Figur 1 ist ein Blockschaltbild eines zweispurigen Fahrzeugs 10 mit Elektromotor 37 dargestellt. Das Fahrzeugs 10 umfasst eine Vielzahl erster Sensoren, insbesondere einen ersten Sensor 11, einen zweiten Sensor 12, und einen dritten Sensor 13. Die ersten Sensoren 11, 12, 13 sind zum Erfassen von Umweltinformationen beziehungsweise Umgebungsdaten des Fahrzeugs 10 eingerichtet und weisen beispielsweise Temperatursensoren zum Erfassen einer Umgebungstemperatur, eine Kamera zum Erfassen eines Bildes einer das Fahrzeugs 10 unmittelbar umgebenden Umwelt, ein Mikrofon zum Erfassen von Geräuschen einer das Fahrzeugs 10 unmittelbar umgebenden Umwelt und Abstandssensoren wie beispielsweise Ultraschallsensoren zum Erfassen von Abständen zu das Fahrzeug 10 umgebenden Objekten auf. Die ersten Sensoren 11, 12, 13 übertragen die von ihnen erfassten Umgebungssignale an eine erste Steuereinheit 40 des Fahrzeugs 10.

Das Fahrzeug 10 weist ferner eine Mehrzahl zweiter Sensoren, insbesondere einen vierten Sensor 51, einen fünften Sensor 52, und einen sechsten Sensor 53 auf. Bei den zweiten Sensoren 51, 52 ,53 handelt es sich um Sensoren zum Ermitteln von das Fahrzeug 10 selbst betreffenden Zustandsdaten, wie beispielsweise aktuelle Lage- und Bewegungsinformationen des Fahrzeugs 10. Bei den zweiten Sensoren handelt es sich folglich beispielsweise um Geschwindigkeitssensoren, Beschleunigungssensoren, Neigungssensoren, Innenraumbewegungsmelder, Drucksensoren in den Fahrzeugsitzen oder dergleichen.

Darüber hinaus sind zumindest einige der zweiten Sensoren 51, 52, 53 zum Erfassen eines Verschmutzungsgrads des Fahrzeugs ausgebildet. Die dafür ausgebildeten zweiten Sensoren umfassen beispielsweise eine Innenraumkamera zum Erfassen von Bildsignalen des Fahrzeuginnenraums, eine Dashboard-Kamera zum Erfassen von Bildsignalen der Motorhaube, eine Kamera in einem Seitenspiegel zum Erfassen von Bildsignalen einer Seitentür des Fahrzeugs und anderweitige Sensoren zum Erfassen einer Verschmutzung, beispielsweise anhand eines Reflektiongrades des Fahrzeuglacks oder dergleichen. Die zweiten Sensoren 51, 52, 53 übermitteln die von ihnen erfassten Zustandssignale an die erste Steuereinheit 40 des Fahrzeugs 10. Darüber hinaus übermitteln zumindest einige der zweiten Sensoren 51, 52, 53 ihre Messergebnisse unmittelbar an ein Fahrsystem 30 des Fahrzeugs 10.

Das Fahrzeug 10 weist ferner ein erstes Kommunikationsmodul 20 mit einem Speicher 21 und einem oder mehreren Transpondern beziehungsweise Sendeempfängern 22 auf. Bei den Transpondern 22 handelt es sich um einen Funk-, WLAN-, GPS- oder Bluetooth-Sendeempfänger oder dergleichen. Der Transponder kommuniziert mit dem internen Speicher 21 des ersten Kommunikationsmoduls 20, beispielsweise über einen geeigneten Datenbus. Mittels des Transponders 22 kann beispielsweise die aktuelle Position des Fahrzeugs 10 durch Kommunikation mit einem GPS Satelliten 61 ermittelt und diese im internen Speicher 21 gespeichert werden. Ebenso kann mittels des Transponders 22 eine im Speicher 21 abgelegte Berechtigungsinformation an ein externes Kommunikationsmodul übermittelt werden. Das erste Kommunikationsmodul 20 kommuniziert mit der ersten Steuereinheit 40.

Darüber hinaus ist das erste Kommunikationsmodul 20 dafür eingerichtet, mit einem Server 70, insbesondere einem vierten Kommunikationsmodul 71 eines Servers 70, zu kommunizieren, beispielsweise über ein UMTS (Universal Mobile Telecommunication Service) oder LTE (Long Term Evolution) Mobilfunknetz. Das erste Kommunikationsmodul 20 ist ferner dazu eingerichtet mit einem zweiten Kommunikationsmodul 92 einer Servicestation 90 zu kommunizieren und ist ferner dazu eingerichtet mit einem dritten Kommunikationsmodul 81 eines mobilen Endgeräts 84 zu kommunizieren, beispielsweise über ein UMTS oder LTE Mobilfunknetz. Die Kommunikation über das Mobilfunknetz erfolgt dabei über ein oder mehrere Basisstationen 62.

Das Fahrzeug 10 weist ferner das Fahrsystem 30 auf, das zum vollständig autonomen Fahrbetrieb, insbesondere zur Längs- und Querführung, des Kraftfahrzeugs 10 eingerichtet ist. Das Fahrsystem 30 weist ein Navigationsmodul 32 auf, das zum Berechnen von Routen zwischen einem Start- und einem Zielpunkt und zum Ermitteln der entlang dieser Route vom Kraftfahrzeug 10 durchzuführenden Manöver eingerichtet ist. Darüber hinaus umfasst das Fahrsystem 30 einen internen Speicher 31, beispielsweise für Kartenmaterialien, der mit dem Navigationsmodul 32 kommuniziert, beispielsweise über einen geeigneten Datenbus. Zumindest ein Teil der zweiten Sensoren 51, 52, 53, des Kraftfahrzeugs übermittelt seine Messergebnisse direkt an das Fahrsystem 30. Bei diesen unmittelbar an das Fahrsystem 30 übermittelten Daten handelt es sich insbesondere um aktuelle Lage- und Bewegungsinformationen des Fahrzeugs 10. Diese werden bevorzugt von Geschwindigkeitssensoren, Beschleunigungssensoren, Neigungssensoren, etc. erfasst.

Das Fahrzeug 10 weist ferner ein elektrisches Fahrsystem 35 auf, das die zum elektrischen Antrieb des Fahrzeugs 10 notwendigen Funktionalitäten zur Verfügung stellt. Insbesondere weist das elektrische Fahrsystem 35 einen elektrischen Energiespeicher 36 auf, der einem Elektromotor 37 die zum Antrieb des Fahrzeugs 10 notwendige elektrische Energie zur Verfügung stellt. Das elektrische Fahrsystem 35 weist ferner eine nicht dargestellte Ladevorrichtung zum Aufladen des elektrischen Energiespeichers 36 auf. Bei dem Fahrzeug 10 kann es sich darüber hinaus um ein Hybridfahrzeug handeln, welches einen Wasserstofftank zum Versorgen eines im Fahrzeug angeordneten Brennstoffzellensystems aufweist.

Das Fahrzeug weist ferner eine Nutzerschnittstelle 38 auf, die zum Erfassen einer Eingabe zumindest eines Nutzers des Fahrzeugs 10 ausgebildet ist. Bevorzugt ist die Nutzerschnittstelle 38 als ein Touchscreen eines Kombiinstruments des Fahrzeugs 10 ausgebildet. Auf dem Kombiinstrument können beispielsweise Menus und Informationen dargestellt und entsprechende Eingaben eines Nutzers empfangen werden. Die Nutzerschnittstelle 38 empfängt und sendet Daten von beziehungsweise an Steuereinheit 40.

Das Fahrzeug 10 weist ferner eine erste Steuereinheit 40 auf. Die erste Steuereinheit 40 verfügt über einen internen Speicher 41 und eine CPU 42, welche miteinander kommunizieren, beispielsweise über einen geeigneten Datenbus. Darüber hinaus steht die erste Steuereinheit 40 in Kommunikationsverbindung mit zumindest den ersten Sensoren 11, 12, 13, den zweiten Sensoren 51, 52, 53, dem ersten Kommunikationsmodul 20 und dem Fahrsystem 30, dem elektrischen Fahrsystem 35 und der Nutzerschnittstelle 38, beispielsweise über eine oder mehrere jeweilige CAN-Verbindungen, eine oder mehrere jeweilige SPI-Verbindungen, oder andere geeignete Datenverbindungen. Die erste Steuereinheit 40 ist bevorzugt dazu ausgebildet, die Durchführung der Schritte des erfindungsgemäßen Verfahrens einer Steuereinheit zu kontrollieren.

Das erfindungsgemäße System zum Durchführen des erfindungsgemäßen Verfahrens weist ferner bevorzugt einen Server 70 auf. Der Server 70 wird bevorzugt von einem Flottenbetreiber einer autonomen Fahrzeugflotte, beispielsweise im Rahmen eines Carsharing-Konzepts, und/oder von einem Serviceanbieter für Fahrzeugreinigungen und/oder von einem Fahrzeughersteller betrieben. Der Server 70 weist ein viertes Kommunikationsmodul 71 auf, das zur Kommunikation mit dem gleichen Protokoll wie das erste Kommunikationsmodul 20 des Fahrzeugs 10 eingerichtet ist. Der Server 70 weist ferner eine vierte Steuereinheit 72 auf. Ferner weist der Server 70 bevorzugt einen nicht dargestellten Speicher auf.

Das erfindungsgemäße System zum Durchführen des erfindungsgemäßen Verfahrens weist ferner eine Mehrzahl erfindungsgemäßer Servicestationen 90 auf, von denen Figur 1 eine zeigt.

Die Servicestation 90 weist ein zweites Kommunikationsmodul 91 auf, das zur Kommunikation mit dem ersten Kommunikationsmodul 20 des Fahrzeugs 10, zur Kommunikation mit dem vierten Kommunikationsmodul 71 des Servers 70 und zur Kommunikation mit einem dritten Kommunikationsmodul 81 eines mobilen Endgeräts 80 ausgebildet ist. Insbesondere ist das zweite Kommunikationsmodul 91 zur Kommunikation mit dem gleichen Protokoll wie das erste Kommunikationsmodul 20 des Fahrzeugs 10, wie das vierte Kommunikationsmodul 71 des Servers 70 und wie das dritte Kommunikationsmodul 81 des mobilen Endgeräts 80 eingerichtet.

Darüber hinaus weist die Servicestation 90 eine zweite Steuereinheit 92 auf, welche einen Speicher 93 und eine CPU 94 aufweist, die über einen geeigneten Datenbus, beispielsweise einen CAN-Bus oder SPI-Bus, miteinander kommunizieren.

Die Servicestation 90 weist ferner ein erstes Servicemodul 95 zum Durchführen einer Innenreinigung des Fahrzeugs 10 und ein zweites Servicemodul 96 zum Durchführen einer Außenreinigung des Fahrzeugs 10 auf. Ferner weist die Servicestation 90 ein drittes Servicemodul 97 auf, das zum Befüllen eines Energiespeichers 36 des Fahrzeugs ausgebildet ist. Darüber hinaus weist die Servicestation 90 ein den Servicemodulen 95, 96, 97 vorgelagertes erstes Kontrollmodul 98 auf, das zum Erfassen erster Informationen zu einem Verschmutzungsgrad des Fahrzeugs 10 ausgebildet ist. Ferner weist die Servicestation 90 ein den Servicemodulen 95, 96, 97 nachgelagertes zweites Kontrollmodul 99 auf, das zum Erfassen zweiter Informationen zu einem Verschmutzungsgrad des Fahrzeugs 10 ausgebildet.

Die Servicestation 90 kann ferner ein nicht dargestelltes viertes Servicemodule zum Durchführen einer Wartung und/oder einer Reparatur des Fahrzeugs 10 aufweisen. Das vierte Servicemodul ist beispielsweise dazu ausgebildet, Betriebsflüssigkeiten des Fahrzeugs 10, wie beispielsweise Kühlflüssigkeit, Bremsflüssigkeit, Wischwasser oder dergleichen aufzufüllen. Alternativ oder zusätzlich ist das vierte Servicemodul dazu ausgebildet, Verschleißteile des Fahrzeugs 10 auszutauschen, beispielsweise Bremsbeläge, Wischerblätter oder Luftfilter.

Die Servicestation 90 kann ferner ein nicht dargestelltes Logistikmodul zum Beladen und/oder Entladen des Fahrzeugs 10 aufweisen. Mit dem Logistikmodul werden bevorzugt bestellte Waren eines Nutzers, der ein autonomes Flottenfahrzeug 10 geordert hat, in dieses Flottenfahrzeug 10 geladen, bevor es die autonome Fahrt zu dem Nutzer antritt. Alternativ oder zusätzlich können aus einem von einer Fahrt mit einem bestimmten Nutzer zurück kehrenden Fahrzeug 10 Waren oder Güter mittels des Logistikmoduls entnommen werden. Beispielsweise ist das Logistikmodul mit einem automatischen Regallager versehen.

Jedes der vorgenannten Servicemodule 95, 96, 97 und die Kontrollmodule 98, 99 sind zur Kommunikation mit der Steuereinheit 92 ausgebildet. Die zweite Steuereinheit 92 ist dazu ausgebildet, in Kommunikation mit dem zweiten Kommunikationsmodul 91, den Servicemodulen 95, 96, 97 und den Kontrollmodulen 98, 99 die Durchführung der Schritte des erfindungsgemäßen Verfahrens einer Steuereinheit 90 zu kontrollieren.

Darüber hinaus weist das erfindungsgemäße System ein mobiles Endgerät 80, beispielsweise ein persönliches Kommunikationsgerät wie ein Smartphone oder ein Tablet eines Fahrers, auf. Das mobile Endgerät 80 weist ein drittes Kommunikationsmodul 81 auf. Das dritte Kommunikationsmodul 81 weist dabei einen Speicher 83 und einen oder mehrere Transponder 82 beziehungsweise Sendeempfängern 82 auf. Bei den Transpondern 82 handelt es sich um Funk-, WLAN-, GPS- oder Bluetooth-Sendeempfänger oder dergleichen. Der Transponder 82 kommuniziert mit dem internen Speicher 83 des dritten Kommunikationsmoduls 81, beispielsweise über einen geeigneten Datenbus. Bevorzugt ist das dritte Kommunikationsmodul 81 dazu eingerichtet über ein UMTS oder LTE (Long Term Evolution) Mobilfunknetz miteinander zu kommunizieren. Das mobile Endgerät 80 weist ferner eine dritte Steuereinheit 84 auf, welche zum Durchführen der jeweiligen Schritte des erfindungsgemäßen Verfahrens eingerichtet ist.

Die dritte Steuereinheit 80 weist einen internen Speicher 85 und eine CPU 86 auf, welche miteinander kommunizieren, beispielsweise über einen geeigneten Datenbus. Darüber hinaus steht die zweite Steuereinheit 84 in Kommunikationsverbindung mit zumindest einer Kamera 87 des mobilen Endgeräts, beispielsweise einer Monokamera 87 oder einer Stereokamera 87. Ferner steht die zweite Steuereinheit 84 in Kommunikationsverbindung mit einem Touchscreen 88 des mobilen Endgeräts 80 und kontrolliert den Touchscreen 88. Der Touchscreen 88 ist insbesondere zum Darstellen von Informationen und zum Erfassen von Nutzereingaben ausgebildet. Die Kommunikationsverbindungen sind über eine oder mehrere jeweilige CAN-Verbindungen, SPI-Verbindungen, oder andere Datenverbindungen realisiert.

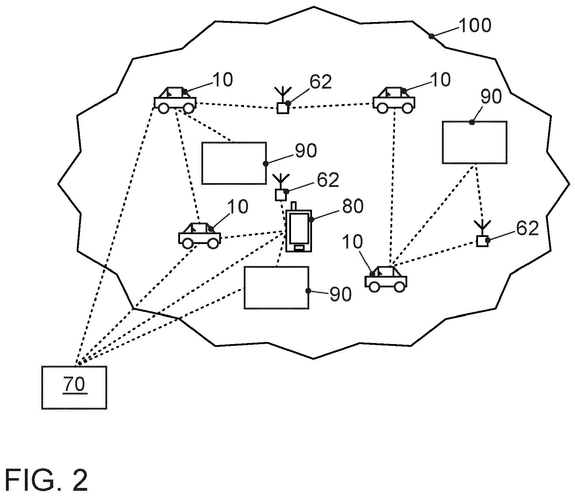

Figur 2 zeigt eine schematische Darstellung eines Betriebsbereichs 100 zur Durchführung des erfindungsgemäßen Verfahrens mittels des in Figur 1 dargestellten Systems. Der Betriebsbereich 100 erstreckt sich bevorzugt über ein urbanes Ballungsgebiet, beispielsweise eine Stadt oder ein Stadtzentrum. Innerhalb des Betriebsbereichs 100 befindet sich eine Vielzahl autonomer Fahrzeuge 10, von denen jedes eine grundlegende Konfiguration, wie mit Bezug zu Figur 1 erläutert, aufweist. Jedes der autonomen Fahrzeuge 10 ist dabei von Nutzern eines Carsharing-Dienstes abrufbar oder aber einem bestimmten Nutzer dauerhaft zugeordnet.

Der Betriebsbereich 100 weist eine Vielzahl von Servicestationen 90 auf. Ferner ist ein Server 70 außerhalb des Betriebsbereichs 100 angeordnet. Der Server 70 kann jedoch auch im Betriebsbereich 100 angeordnet sein. Die autonomen Fahrzeuge 10 sind zur Kommunikation untereinander, insbesondere mittels der ersten Kommunikationsmodule 20 und via Basisstationen 62 eines Mobilfunknetzes, ausgebildet. Die Fahrzeuge 10 sind ferner zur Kommunikation mit den Servicestationen 90, mit dem mobilen Endgerät eines Nutzers 80 und mit dem Server 70 ausgebildet. Die Kommunikation erfolgt dabei direkt zwischen den Elementen oder über Basisstationen 62 eines Mobilfunknetzes, wie mit den gestrichelten Linien angedeutet. Darüber hinaus sind auch alle anderen Komponenten des in der Figur 2 dargestellten Systems zur direkten oder indirekten Kommunikation miteinander ausgebildet, wie beispielsweise das mobile Endgerät 80 mit dem Server 70 und den Servicestationen 90 und der Server 70 mit den Servicestationen 90, wie in der Figur 2 schematisch dargestellt.

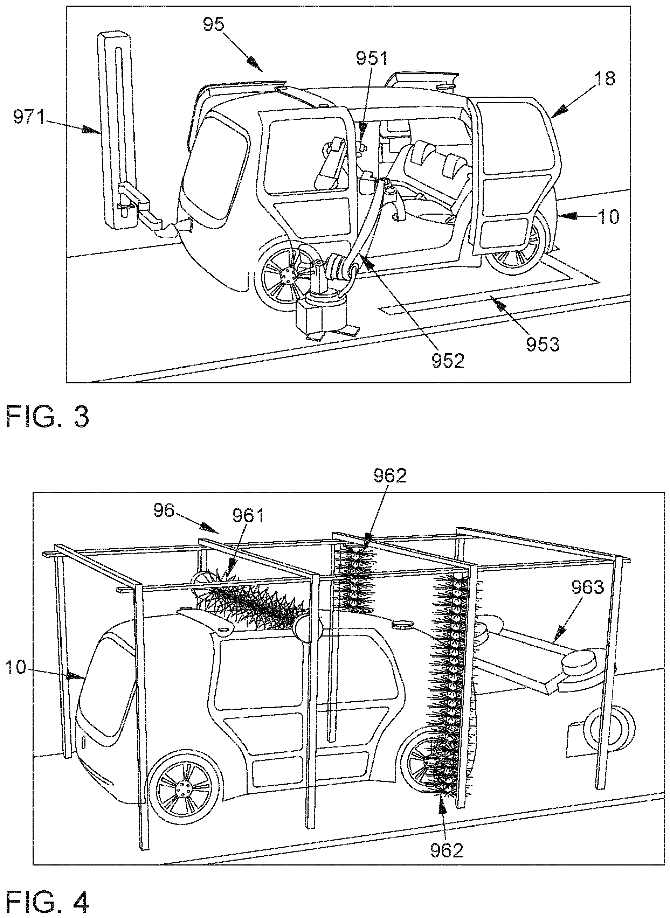

Mit Bezug zu den Figuren 3 bis 6 werden Ausführungsformen der erfindungsgemäßen Servicestation 90 sowie der darin enthaltene Servicemodule 95, 96, 97 erläutert.

Figur 3 zeigt eine schematische Darstellung eines ersten Servicemoduls 95 zur Innenraumreinigung des Fahrzeugs 10. Um eine Innenraumreinigung des Fahrzeugs 10 durchzuführen, fährt dieses in das Servicemodul 95 ein, um dort auf einer Halteposition 953 zum Stehen zu kommen. Sobald das Fahrzeug 10 auf der Halteposition 953 zum Stehen kommt, öffnen sich die Fahrzeugtüren 18 des Fahrzeugs 10 selbsttätig. Dies ist bevorzugt durch die Steuereinheit 92 der Servicestation 90 oder die Steuereinheit 40 des Fahrzeugs 10 veranlasst. Sobald die Fahrzeugtüren 18 geöffnet sind, werden ein erster Roboterarm 951 und ein zweiter Roboterarm 952 in das Fahrzeug eingeführt. An den Roboterarmen 951, 952 sind Werkzeuge zum Durchführen einer Innenraumreinigung angeordnet, insbesondere eine Staubsaugerdüse, ein Applikator zum Auftrag eines Reinigungsmittels und Mittel zur Polsterreinigung. Das in Figur 3 gezeigte erste Servicemodul 95 weist ferner einen Ladeanschluss 971 zum Laden eines elektrischen Energiespeichers 36 des Fahrzeugs 10 auf.

Figur 4 zeigt eine schematische Darstellung eines zweiten Servicemoduls 96 zur Außenreinigung des Fahrzeugs 10. Das zweite Servicemodul 96 entspricht weitgehend aus dem Stand der Technik bekannten automatischen Waschstraßen zur autonomen Außenreinigung eines Fahrzeugs 10. Das zweite Servicemodul 96 weist insbesondere nicht dargestellte Mittel zum Auftrag eines Reinigungsfluides auf, wie beispielsweise Düsen zum Auftrag einer Seifenlaufe. Darüber hinaus weist das zweite Servicemodul 96 eine rotierbare obere Waschbürste 961 und rotierbare seitliche Waschbürsten 962 zum Verteilen des Reinigungsfluides und zum Lösen des Schmutzes auf. Ferner weist das zweite Servicemodul 96 einen Trockenfön 963 zum Trocknen des Fahrzeugs 10 auf.

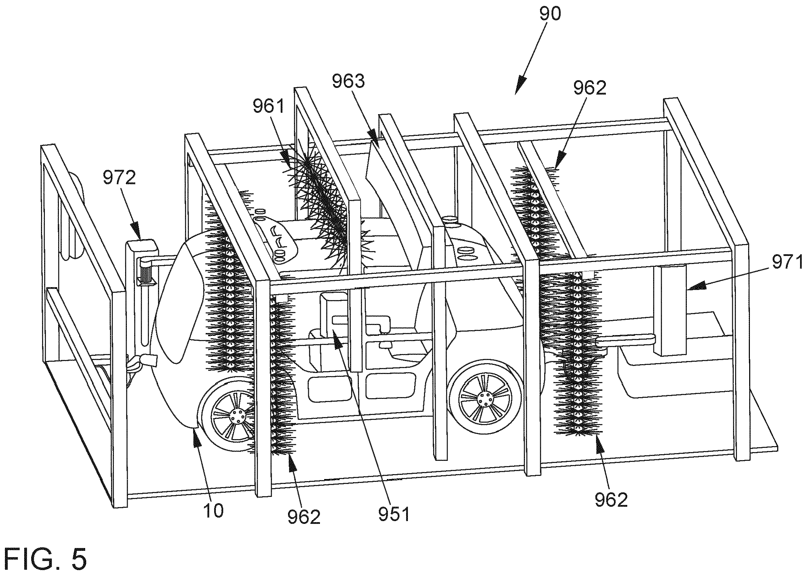

Figur 5 zeigt eine schematische Darstellung einer erfindungsgemäßen Servicestation 90, aufweisend das erste Servicemodul 95 der Figur 3 und das zweite Servicemodul 96 der Figur 4 gemäß einer ersten Ausführungsform. In dieser ersten Ausführungsform der Servicestation 90 sind das erste und zweite Servicemodul 95, 96 in einem gemeinsamen Bereich der Servicestation 90 angeordnet. Somit ermöglicht die Servicestation 90 gemäß dieser ersten Ausführungsform das zumindest teilweise simultane Durchführen einer Außenreinigung und einer Innenreinigung an dem Fahrzeug 10. Die Servicestation 90 weist ferner ein erstes Kontrollmodul 98 und ein zweites Kontrollmodul 99 auf.

Ein Ablauf der autonom durchgeführten Serviceaktion in der Servicestation 90 gemäß der ersten Ausführungsform beginnt mit der autonomen Einfahrt des Fahrzeugs 10 in die Servicestation 90. Diese Einfahrt wird bevorzugt durch das Fahrsystem 30 des Fahrzeugs 10 vermittelt, wobei die Steuereinheit 40 des Fahrzeugs 10 vermittels der Kommunikationsmodule 20, 91 mit der Steuereinheit 92 der Servicestation 90 kommuniziert. Bei der Einfahrt des Fahrzeugs wird mittels eines nicht dargestellten ersten Kontrollmoduls 98 ein Verschmutzungsgrad des Fahrzeuginnenraums und der Fahrzeugoberfläche erfasst.

Sofern das Fahrzeug in der Servicestation 90 eine Halteposition erreicht hat, öffnen sich die Türen 18 des Fahrzeugs 10 automatisch und ein mobiler Reinigungsroboter fährt autonom in den Innenraum oder wird in den Innenraum des Fahrzeugs 10 eingebracht. Sobald sich die Türen 18 des Fahrzeugs 10 schließen, startet der mobile Reinigungsroboter die Innenraumreinigung und startet eine Außenreinigung des Fahrzeugs 10 mittels des zweiten Servicemoduls 97, insbesondere mittels der Waschbürsten 961, 962 und dem Trockenfön 963.

Sobald die Außenreinigung und die Innenreinigung abgeschlossen sind, öffnen sich die Türen 18 und der mobile Reinigungsroboter fährt heraus oder wird herausgehoben. Gegebenenfalls erfolgt über nicht dargestellte Kameras oder andere Sensoren eines zweiten Kontrollmodules 99 eine Überprüfung der Innen- und/oder Außenreinigung des Fahrzeugs 10. Ist diese Überprüfung abschlossen, fährt das Fahrzeug 10 autonom aus der Servicestation 90.

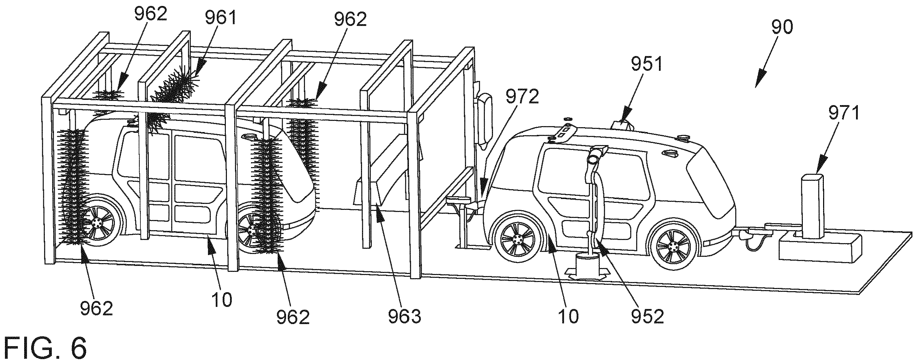

Figur 6 zeigt eine schematische Darstellung einer erfindungsgemäßen Servicestation 90, aufweisend das erste Servicemodul 95 der Figur 3 und das zweite Servicemodul 96 der Figur 4 gemäß einer zweiten Ausführungsform. In dieser zweiten Ausführungsformen der Servicestation 90 sind das erste Servicemodul 95 und das zweite Servicemodul 96 in verschiedenen Bereichen der Servicestation 90 angeordnet. Die Servicestation 90 weist ferner ein erstes Kontrollmodul 98 und ein zweites Kontrollmodul 99 auf.

Ein Ablauf der autonom durchgeführten Serviceaktion in der Servicestation 90 gemäß der zweiten Ausführungsform beginnt mit der autonomen Einfahrt des Fahrzeugs 10 in einen ersten Bereich der Servicestation 90. Diese Einfahrt wird bevorzugt durch das Fahrsystem 30 des Fahrzeugs 10 vermittelt, wobei die Steuereinheit 40 des Fahrzeugs 10 vermittels der Kommunikationsmodule 20, 91 mit der Steuereinheit 92 der Servicestation 90 kommuniziert. Bei der Einfahrt des Fahrzeugs wird mittels eines nicht dargestellten ersten Kontrollmoduls 98 ein Verschmutzungsgrad des Fahrzeuginnenraums und der Fahrzeugoberfläche erfasst. Sofern das Fahrzeug 10 in dem ersten Bereich der Servicestation 90 eine Halteposition erreicht hat, beginnt die Außenreinigung des Fahrzeugs 10 mittels dem im ersten Bereich angeordneten zweiten Servicemodul 96, insbesondere mittels der Waschbürsten 961, 962 und dem Trockenfön 963. Sobald die Außenreinigung abgeschlossen ist, erfolgt gegebenenfalls mittels nicht dargestellter Kameras oder Sensoren eine Überprüfung der Außenreinigung des Fahrzeugs 10. Sobald die Außenreinigung und/oder die Überprüfung abgeschlossen ist, fährt das Fahrzeug 10 autonom zu einem dem ersten Bereich nachgelagerten zweiten Bereich der Servicestation 90 oder wird mittels eines Transportbands der Servicestation 90 vom ersten zum zweiten Bereich transportiert.

Sofern das Fahrzeug im zweiten Bereich der Servicestation 90 eine Halteposition erreicht hat, öffnen sich die Türen 18 des Fahrzeugs 10 automatisch und Roboterarme 951, 952 fahren autonom in den Innenraum ein. Mittels an den Roboterarmen 951, 952 befindlicher Werkzeuge beginnt eine Innenraumreinigung des Fahrzeugs 10. Gleichzeitig wird mittels des Ladeanschluss 971 ein elektrischer Energiespeicher 36 des Fahrzeugs 10 befüllt und wird mittels Wasserstoffbetankung 972 der Wasserstofftank des Fahrzeugs 10 gefüllt. Sobald die Innenreinigung abgeschlossen sind, werden die Roboterarme 951, 952 aus dem Fahrzeug 10 herausgefahren. Gegebenenfalls erfolgt über nicht dargestellte Kameras oder andere Sensoren eines zweiten Kontrollmodules 99 eine Überprüfung der Innenreinigung des Fahrzeugs 10. Ist diese Überprüfung abschlossen, werden die Befüllelemente von Ladeanschluss 971 und Wasserstoffbetankung 972 abgezogen und das Fahrzeug 10 fährt autonom aus der Servicestation 90 heraus. In einer alternativen Ausführungsform ist der Trockenfön 963 in dem zweiten Bereich angeordnet und erfolgt ein Trocknen des Fahrzeugs 10 parallel zur Innenraumreinigung und zum Auffüllen der Energiespeicher 36.

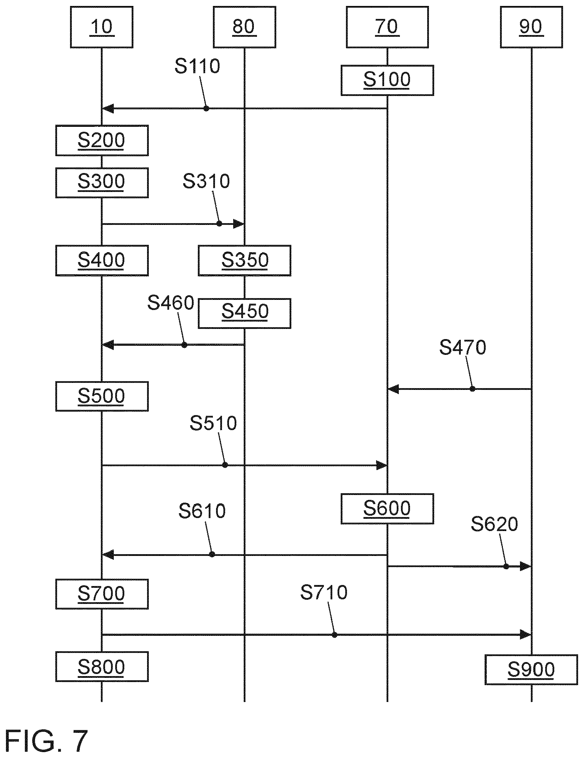

Figur 7 zeigt ein schematisches Ablaufdiagram eines in einem erfindungsgemäßen System, aufweisend ein autonom fahrendes Fahrzeug 10, ein Server 70 eines Serviceanbieters für das autonome Fahrzeug 10, ein mobiles Endgerät eines Nutzers des Fahrzeugs 10 und eine Servicestation, wie vorstehend beschrieben, durchgeführtes Verfahrens zur Ermittlung einer autonomen Reinigung für das Fahrzeug 10 gemäß einer Durchführungsform.

In einem ersten Schritt S100 des Verfahrens erzeugt der Server 70 erste Informationen zu einem Reinigungsbedarf eines Fahrzeugs 10, da ein vorbestimmtes Intervall seit einer letzten Reinigung des Fahrzeugs verstrichen ist. Das Intervall wird dabei vom Server in Abhängigkeit externer Informationen, insbesondere zur Jahreszeit und zum Wetter, erzeugt. In einem Schritt S110 übermittelt der Server 70 die ersten Informationen ein Fahrzeug 10, insbesondere an eine erste Steuereinheit 40 und via ein Kommunikationsmodul 20 des Fahrzeugs 10.

In einem Schritt S200 des Verfahrens ermittelt das Fahrzeug 10 seinen Reinigungsbedarf anhand der zuvor vom Server 70 empfangenen ersten Informationen. Daraufhin gibt das Fahrzeug in Schritt S300 über ein Kombiinstrument des Fahrzeugs 10 eine erste Eingabeaufforderung aus. Mit der ersten Eingabeaufforderung wird ein Nutzer des Fahrzeugs 10 aufgefordert Angaben zu Art, Ort und Grad einer Verschmutzung des Fahrzeugs 10 mittels des Kombiinstruments des Fahrzeugs 10 einzugeben.

Ferner übermittelt das Fahrzeug 10 in Schritt S310 eine Nachricht an ein mit dem Fahrzeug 10 verbundenes mobiles Endgerät 80. Bei dem mobilen Endgerät 80 handelt es sich insbesondere um ein Smartphone des Nutzers, das mittels Bluetooth mit dem Fahrzeug 10 verbunden ist. Mittels der Nachricht in Schritt S310 informiert das Fahrzeug das mobile Endgerät 80 über den Reinigungsbedarf des Fahrzeugs 10. Die Nachricht ist mittels eines entsprechend ausgestalteten Headers an eine für das erfindungsgemäße Verfahren ausgebildete Anwendung des Smartphones 80 adressiert und wird von dieser empfangen. Dort bewirkt die Nachricht, dass die Anwendung das Smartphone 80 dazu ansteuert, dass dieses in Schritt S350 eine zweite Eingabeaufforderung mittels eines Bildschirms 88 des Smartphones 80 ausgibt. Mit der zweiten Eingabeaufforderung wird der Nutzer des Fahrzeugs 10 aufgefordert zumindest ein Foto von einem Innenraum und einer Außenoberfläche des Fahrzeugs 10 zu machen.

In Schritt S400 gibt der Nutzer mittels des Kombiinstruments des Fahrzeugs 10 Informationen zu Art, Ort und Grad einer Verschmutzung des Fahrzeugs 10 ein. Hierfür wird er durch mehrere dargestellte Menüs geführt, in denen die entsprechenden Informationen mittels Skalen und vorformulierten Antwortmöglichkeiten abgefragt werden. Anschließend nimmt der Nutzer in Schritt S450 mittels einer Kamera 87 des Smartphones 80 mehrere Fotografien vom Fahrzeuginnenraum und von der Außenoberfläche des Fahrzeugs 10 auf. Die so erfassten Bildinformationen werden in Schritt S460 an das Fahrzeug übermittelt.

In Schritt S500 verknüpft das Fahrzeug 10 die durch die Nutzereingabe erfassten Informationen zu Art, Ort und Grad der Verschmutzung des Fahrzeugs 10 mit den von dem Smartphone 80 empfangenen Fotografien zu zweiten Informationen zur Verschmutzung des Fahrzeugs 10. Diese zweiten Informationen zur Verschmutzung des Fahrzeugs 10 übermittelt dieses in Schritt S510 an den Server 70. Das Fahrzeug 10 übermittelt dem Server in Schritt S510 ferner Angaben zu seiner Position. Der Server 70 hat zuvor in Schritt S470 von zumindest einer Servicestation 90 Informationen zur Auslastung der Servicestation 90 empfangen. Ferner sind auf dem Server 70 Informationen zu einer Ausstattung der Servicestation gespeichert.

In Schritt S600 ermittelt der Server 70 anhand der von dem Fahrzeug 10 empfangenen zweiten Informationen und anhand der von der Servicestation 90 empfangenen Informationen zu einer Auslastung der Servicestation 90 sowie anhand von Informationen zu einer Ausstattung der Servicestation 90 eine an dem Fahrzeug 10 durchzuführende Reinigung. Das Ermitteln der durchzuführenden Reinigung erfolgt in dem Server 70 bevorzugt automatisch, beispielsweise datenbankbasiert, mittels zumindest eines Look-up-Tables, LUT, mittels zumindest eines Algorithmus und/oder mittels einer künstlichen Intelligenz und insbesondere unter Berücksichtigung der in den einzelnen Servicestationen 90 jeweils vorhandenen Servicemodule und der damit durchführbaren Reinigungsaktionen. Ferner berücksichtigt der Server 70 die Position des Fahrzeugs und die Positionen der Servicestationen 90 und ermittelt letztlich eine mittels einer bestimmten Servicestation 90 an dem Fahrzeug 10 durchzuführenden Reinigung.

In Schritt S610 übermittelt der Server 70 Informationen zu der ermittelten durchzuführenden Reinigung an das Fahrzeug 10. Diese Informationen enthalten dabei Angaben zu der Art der durchzuführenden Reinigung, zur geschätzten Dauer der Reinigung in der Servicestation 90, zu den geschätzten Kosten der Reinigung in der Servicestation 90 und zur Position der Servicestation 90. Ferner übermittelt der Service 70 in Schritt S620 Informationen zu der durchzuführenden Reinigung an die Servicestation 90. Diese Informationen spezifizieren insbesondere die Art der durchzuführenden Reinigung sowie fahrzeugspezifische Angaben zu dem Fahrzeug 10 und gegebenenfalls nutzerspezifische Angaben zu dem Nutzer desselben. Somit ist die Servicestation über die von dem Server 70 für das Fahrzeug 10 ermittelte durchzuführende Reinigung informiert, wobei die Information in Schritt S710 gleichzeitig als Legitimation für das Durchführen der ermittelten Reinigung an dem Fahrzeug 10 fungiert.

In Schritt S700 gibt das Fahrzeug 10 eine weitere Eingabeaufforderung an den Nutzer aus und informiert diesen über die ermittelte durchzuführende Reinigung des Fahrzeugs 10, die geschätzte Dauer und die geschätzten Kosten der ermittelten durchzuführenden Reinigung. Der Nutzer kann darauf die ermittelte durchzuführende Reinigung bestätigen und in Schritt S710 wird eine entsprechende Bestätigung an die Servicestation 90 gesendet. Die gesendete Bestätigung enthält eine anhand der Position des Fahrzeugs 10 und anhand der Position der Servicestation 90 geschätzte Ankunftszeit des Fahrzeugs 10 an der Servicestation 90 an.

In Schritt S800 führt das Fahrzeug 10 anhand der in Schritt S610 erhaltenen Position der Servicestation 90 eine autonome Fahrt zu der Servicestation 90 durch. Alternativ erfolgt die autonome Fahrt zu einem vom Nutzer in Schritt S700 festgelegten Zeitpunkt. Dieser Zeitpunkt ist aus einer vom Server 70 anhand der in Schritt S470 empfangenen Auslastung der Servicestation 90 bestimmten Liste möglicher Zeitpunkte der Reinigung ausgewählt. Die Auswahl des Nutzers wird dabei in Schritt S710 ebenfalls an die Servicestation 90 übermittelt.

In Schritt S900 erkennt die Servicestation 90 die Ankunft des Fahrzeugs 10 unter Verwendung der in Schritt S620 vom Server 70 empfangenen Informationen zu dem Fahrzeug 10. Sobald die Ankunft des richtigen Fahrzeugs 10 erkannt ist, führt die Servicestation 90 anhand der in Schritt S620 vom Server 70 empfangenen Informationen zur durchzuführenden Reinigung eine autonome Reinigung an dem Fahrzeug 10 mit einer Innenraumreinigung mittels des ersten Servicemoduls 95 und eine Außenraumreinigung mittels des zweiten Servicemoduls 96 durch. In einem nicht dargestellten etwaigen weiteren Schritt kehrt das Fahrzeug 10 nach der erfolgreich durchgeführten Reinigung autonom zur vorherigen Position oder dem Nutzer zurück.

### Bezugszeichenliste

- 10: Kraftfahrzeug
- 11: erster Sensoren
- 12: zweiter Sensor
- 13: dritter Sensor
- 18: Fahrzeugtür
- 20: erstes Kommunikationsmodul
- 21: Speicher
- 22: Transponder
- 30: erstes Fahrsystem
- 31: Speicher
- 32: CPU
- 35: elektrisches Fahrsystem
- 36: elektrischer Energiespeicher
- 37: Elektromotor
- 38: Nutzerschnittstelle
- 40: erste Steuereinheit
- 41: Speicher
- 42: CPU
- 51: vierter Sensoren
- 52: fünfter Sensor
- 53: sechster Sensor
- 61: GPS Satellit
- 62: Mobilfunkstation
- 63: anderes Fahrzeug
- 70: Server
- 71: viertes Kommunikationsmodul
- 72: vierte Steuereinheit
- 80: mobiles Endgerät
- 81: drittes Kommunikationsmodul
- 82: Transponder
- 83: Speicher
- 84: dritte Steuereinheit
- 85: Speicher
- 86: CPU
- 87: Kamera
- 88: Touchscreen
- 90: erste Servicestation
- 91: zweites Kommunikationsmodul
- 92: zweite Steuereinheit
- 93: Speicher
- 94: CPU
- 95: erstes Servicemodul
- 951: Reinigungsroboter
- 952: Reinigungsroboter
- 953: Halteposition
- 96: zweites Servicemodul
- 961: obere Waschbürste
- 962: seitliche Waschbürste
- 963: Trockenfön
- 97: drittes Servicemodul
- 971: Ladeanschluss
- 972: Wasserstoffbetankung
- 98: erstes Kontrollmodul
- 99: zweites Kontrollmodul

## Patentansprüche

1. Verfahren einer Steuereinheit (40, 84) zum Ermitteln einer Reinigung eines Fahrzeugs (10), das Verfahren aufweisend die Schritte:
Ermitteln eines Reinigungsbedarfs des Fahrzeugs (10) anhand erster Informationen;
Ausgabe zumindest einer Eingabeaufforderung für eine Nutzereingabe;
Erfassen zumindest einer Nutzereingabe enthaltend zweite Informationen zu einer Verschmutzung des Fahrzeugs (10);
Übermitteln der zweiten Informationen an einen Server (70);
Empfang einer Nachricht von dem Server (70) enthaltend dritte Informationen zu einer an dem Fahrzeug (10) durchzuführenden Reinigung.

2. Verfahren nach Anspruch 1, wobei die ersten Informationen von der Steuereinheit (40, 84) erzeugt (in regelmäßigen Abständen), von dem Server (70) empfangen (regelmäßige Intervalle, verfügbare Hubs) oder auf einer Nutzereingabe (Kombiinstrument Fahrzeug/Smartphone) basieren.

3. Verfahren nach Anspruch 1 oder 2, wobei eine Eingabeaufforderung zur Eingabe von Art, Ort und/oder Grad einer Verschmutzung des Fahrzeugs (10) auffordert und wobei die zweiten Informationen Angaben eines Nutzers zu Art, Ort und/oder Grad einer Verschmutzung aufweisen.

4. Verfahren nach einem der vorangehenden Ansprüche, wobei die Eingabeaufforderung zur Aufnahme zumindest eines Fotos von dem Fahrzeug (10) auffordert und wobei die zweiten Informationen zumindest ein Foto des Fahrzeugs (10) aufweisen.

5. Verfahren nach einem der vorangehenden Ansprüche, wobei jeder der Verfahrensschritte jeweils von der Steuereinheit (40) eines Fahrzeugs (10) und/oder von der Steuereinheit (84) eines mobilen Endgeräts (80) durchgeführt werden.

6. Verfahren eines Servers (70) zum Ermitteln einer Reinigung eines Fahrzeugs (10), das Verfahren aufweisend die Schritte:
Empfangen von vierten Informationen zur Auslastung zumindest einer zur Reinigung eines Fahrzeugs (10) eingerichteten Servicestation (90);
Empfangen von zweiten Informationen zu einer Verschmutzung eines Fahrzeugs (10) von einer Steuereinheit (40) des Fahrzeugs (10) und/oder von der Steuereinheit (84) eines mobilen Endgeräts (80);
Ermitteln dritter Informationen zu einer Reinigung des Fahrzeugs anhand der zweiten Informationen und der vierten Informationen; und
Übermitteln der dritten Informationen an die Steuereinheit (40) des Fahrzeugs (10) und/oder an die Steuereinheit (84) des mobilen Endgeräts (80).

7. Verfahren nach Anspruch 6, ferner aufweisend den Verfahrensschritt:
Erzeugen erster Informationen zu einem Reinigungsbedarf eines Fahrzeugs (10); und
Übermitteln der ersten Informationen an eine Steuereinheit (40,84).

8. Verfahren nach Anspruch 6 oder 7, ferner aufweisend den Verfahrensschritt:
Übermitteln der dritten Informationen an eine zur Durchführung der ermittelten Reinigung ausgewählte Servicestation (90).

9. Verfahren nach einem der vorangehenden Ansprüche, wobei die dritten Informationen Angaben zu einer zur Durchführung der ermittelten Reinigung ausgewählte Servicestation (90) aufweisen.

10. System zum Durchführen der Verfahren nach Anspruch 1 und Anspruch 6, aufweisend:
zumindest ein Fahrzeug (10) mit einer Steuereinheit (40), zumindest einer Schnittstelle (38) zum Erfassen einer Nutzereingabe und einem zum Herstellen zumindest einer Kommunikationsverbindung eingerichteten ersten Kommunikationsmodul (20);
zumindest eine in dem Betriebsbereich (100) angeordnete Servicestation (90) mit einer Steuereinheit (94), einem zum Herstellen zumindest einer Kommunikationsverbindung eingerichteten zweiten Kommunikationsmodul (91) und zumindest einem von einem zum Durchführen einer Innenraumreinigung des Fahrzeugs (10) ausgebildeten ersten Servicemodul (95) und einem zum Durchführen einer Außenreinigung des Fahrzeugs (10) ausgebildeten zweiten Servicemodul (96);
ein mobiles Endgerät (80) mit einer Steuereinheit (84), zumindest einem Touchscreen (88) und einem zum Herstellen zumindest einer Kommunikationsverbindung eingerichteten dritten Kommunikationsmodul (81); und
einen Server (70) mit einer Steuereinheit (72) und einem zum Herstellen zumindest einer Kommunikationsverbindung eingerichteten viertes Kommunikationsmodul (71).
